# EUROPÄISCHE PATENTSCHRIFT

(11) **EP 1 357 336 B1**
(45) Veröffentlichungstag und Bekanntmachung des Hinweises auf die Patenterteilung: **08.08.2007**
(21) Anmeldenummer: 03008842.1
(22) Anmeldetag: 25.04.2003
(51) Int. Cl.: F24D 10/00

(54) **Anlage zur Versorgung von Verbrauchern mit Wärmeenergie unterschiedlicher Energieniveaus**
Installation for supplying heat energy of different levels to consumers
Installation pour distribuer de l'énergie de chaleur à différents niveaux de consommateurs

(30) Priorität: 26.04.2002 DE 10218776
(43) Veröffentlichungstag der Anmeldung: 29.10.2003
(73) Patentinhaber: Sun-Systems GmbH, 6300 Wörgl (AT)
(72) Erfinder: Lechner, Georg, 6361 Hopfgarten (AT)
(74) Vertreter: Leske, Thomas

(56) Entgegenhaltungen:
- EP-A- 0 228 307
- EP-A- 0 694 742
- EP-A- 0 892 223
- DE-A- 4 124 304
- DE-A- 10 102 041
- DE-B- 2 852 895
- FR-A- 2 770 628
- NL-A- 6 503 948
- US-A- 5 119 988

## Beschreibung

Die Erfindung betrifft eine Anlage zur Vorsorgung von Verbrauchern mit Wärmeenergie unterschiedlicher Energieniveaus.

Regenerative Energiequellen gewinnen zunehmend an Bedeutung. Als regenerative Energiequellen erlangt die Sonnenenergienutzung immer stärkere Verbreitung. Beispielsweise wird aus der Sonnenenergie Wärmeenergie über Sonnenkollektoren gewonnen. Zusätzlich können derartige Anlagen gekoppelt sein mit Speichern, welche in Form von relativ langen Rohrleitungen im Erdreich oder auch in den Wänden von Gebäuden angeordnet sind. Ein wesentliches Problem bei der Nutzung der Sonnenenergie in Form von Wärmeenergie besteht darin, dass mittels beispielsweise eines Sonnenkollektors bzw. einer Sonnenkollektoranlage je nach Sonnenintensität und auch Jahreszeit unterschiedliche Energieniveaus eines in der Anlage zirkulierenden Trägermediums erreicht werden. Die erreichbaren Energieniveaus stimmen häufig nicht mit den in bestimmten Verbrauchern gewünschten Energieniveaus überein. Mit herkömmlichen Anlagen wird daher versucht, die Energieniveaus logistisch den Verbrauchern zuzuordnen bzw. zuzuteilen, welche am ehesten diesen Energieniveaus entsprechen.

Höhere Energieniveaus eines in einem Sonnenkollektor erwärmten Trägermediums können beispielsweise für Heizzwecke oder für die Warmwasserversorgung verwendet werden, wohingegen ein Trägermedium mit einer niedrigen oder niedrigeren Temperatur mittels Wärmepumpen wiederum auf ein höheres Energieniveau angehoben werden kann.

Es ist beispielsweise aus der AT 405 680 B bekannt, dass der Wirkungsgrad insbesondere von Sonnenkollektoren um so höher ist, je tiefer die Temperatur des Trägermediums ist, das dem Sonnenkollektor zugeführt wird. Bei einer möglichst tiefen Temperatur des zugeführten Trägermediums kann also eine möglichst große Temperaturdifferenz ausgenutzt werden. Es ist also erforderlich, möglichst viel der mittels eines Sonnenkollektors an ein Trägermedium übertragenen Energie an einen oder mehrere Verbraucher zielgerichtet abzugeben.

Für komplexe Anlagen muss berücksichtigt werden, dass in Gebäuden jeglicher Art nicht nur Energie eines hohen Niveaus für Heizzwecke, Brauchwassererwärmung, für Reinigungszwecke, für Schwimmbäder, für die Klimatisierung von Räumen und dergleichen benötigt wird, sondern auch Energie niedrigen Niveaus für Kühlung, für Klimatisierung oder für Kühlzwecke beispielsweise für die Lagerung von Lebensmitteln benötigt wird.

So ist aus der AT 405 680 B eine Anlage zur Versorgung von Verbrauchern an Wärmeenergie mit einem in mindestens einer Wärmequelle erwärmten Trägermedium bekannt, bei welcher einem steuerbaren Verteiler über eine Eingangsleitung das Trägermedium zugeführt wird, welcher mit einer Mehrzahl von Ausgängen versehen ist. Dieser steuerbare Verteiler steuert je nach Bedarf die Vorlaufleitung von Verbrauchern an und versorgt somit die entsprechenden Verbraucher. Das Trägermedium mit höchstem Energieniveau wird dabei dem Verbraucher zugeleitet, welcher gerade die höchste Energieanforderung aufweist. In Abhängigkeit von der Abforderung an Energie von diesem Verbraucher steuert der Verteiler nach dem Rückführen des Trägermediums von diesem Verbraucher in die Eingangsleitung zu dem Verteiler den nächsten Verbraucher an, dessen Bedarf dem dann noch vorhandenen Energieniveau entspricht. Eine derartige Energieabladung erfolgt so lange, wie das Trägermedium über eine wirksame Temperaturdifferenz Energie einem Verbraucher zuführen kann. Über die zusätzliche Verbindung von Wärmepumpen kann bei erfolgter Energieabladung des Energieniveau des Trägermediums wieder auf eine einem bestimmten Verbraucherbedarf zugeschnittene Höhe abgehoben werden.

Bei diesem bekannten System besteht zwar eine hohe Flexibilität bezüglich der Ansteuerung eines jeweiligen Verbrauchers entsprechend seinem Energiebedarf; diese hohe Flexibilität muss jedoch mit einem hohen Rohrleitungsaufwand und einer relativ komplizierten Steuerung des Verteilers erkauft werden.

DE 41 24 304 offenbart eine Einrohrheizungsanlaze mit einer Hauptleitung, in der ein in einer Wärmequelle erwärmtes Trägermedium fließt. In die Hauptleitung sind Verbraucher in Reihe geschaltet, und vor jedem Verbraucher ist, ebenfalls in Reihe geschaltet, ein 3-Wege-Ventil in die Hauptleitung eingesetzt. Jedes der 3-WegeVentile ist derart in die Hauptleitung der Einrohrheizungsanlage vor dem jeweiligen Verbraucher eingesetzt, dass die Hauptleitung einen Zulauf für das 3-Wege-Ventil darstellt, ein Ablauf des 3-Wege-Ventils zu dem Verbraucher führt und ein weiterer zweiter Ablauf des 3-Wege-Ventils direkt zu einer Rücklaufleitung des Verbrauches führt.

Ziel des 3-Wege-Ventils ist es, durch eine gezielte Voreinstellung / Begrenzung des Ventilhubes die maximale Durchflussmenge in Verbraucherrichtung zu limitieren, damit die Wärmeabgabe nachfolgender Verbraucher durch eine höhere Wärmeabgabe des oder der vorangegangenen Verbraucher nicht reduziert werden kann.

Demgegenüber besteht die Aufgabe der vorliegenden Erfindung darin, eine Anlage zur Versorgung von Verbrauchern an Wärmeenergie mit einem in mindestens einer Wärmequelle erwärmten Trägermedium bereitzustellen, bei welcher mit einem gegenüber bekannten Anlagen reduzierten Rohrleitungsaufwand zielgerichtete Temperatur-Zeit-Verläufe in Verbrauchern unterschiedlichen Energieniveaubedarfs erreicht werden können.

Diese Aufgabe wird durch eine Anlage mit den Merkmalen gemäß Anspruch 1 erreicht. Zweckmäßige Weiterbildungen sind in den abhängigen Ansprüchen definiert.

Erfindungsgemäß weist die Anlage zur Versorgung von einer Anzahl von Verbrauchern mit Wärmeenergie unterschiedlicher Energieniveaus eine Wärmequelle, eine Hauptleitung und eine Rückleitung auf, welche durch ein in der Wärmequelle erwärmtes Trägermedium durchströmt werden. Aus der Wärmequelle tritt über eine Austrittsleitung der Strom des Trägermediums in eine Hauptleitung ein, in welcher mehrere Strömungsaufteiler in Reihe, und zwar für jeden Verbraucher ein steuerbarer Strömungsaufteiler, angeordnet sind. Von einem jeweiligen steuerbaren Strömungsaufteiler sind die jeweiligen Verbraucher parallel zu der Hauptleitung mit einer Vorlaufleitung und einer Rücklaufleitung versehen.

Von dem Strömungsaufteiler wird zu dem jeweiligen Verbraucher ein solcher Teilstrom des Trägermediums in die Vorlaufleitung abgezweigt, dass einem vorausgehenden Verbraucher eine gewünschte Wärmemenge pro Zeiteinheit zuführbar ist. Es ist aber auch möglich, dass ein solcher Teilstrom in die Vorlaufleitung des Verbrauchers geleitet wird, dass an einer hinter dem Strömungsaufteiler liegenden Mischungsstelle, in welche die Rücklaufleitung von dem Verbraucher mündet, gezielt ein gewünschtes Energieniveau für einen nachfolgenden Verbraucher einstellbar ist.

Gemäß der Erfindung sind die jeweiligen Strömungsaufteiler so gestaltet, dass ein Teilstrom zu einem Verbraucher abgezweigt werden kann, dass gegebenenfalls der komplette Strom an Trägermedium in der Hauptleitung zu einem Verbraucher geleitet wird oder dass ein Verbraucher, für welchen ein bestimmtes Energieniveau des Trägermediums nicht vorhanden ist oder welcher gerade für das herrschende Energieniveau des Trägermediums keinen Bedarf hat, überhaupt keinen Strom an Trägermedium erhält, so dass in einem solchen Fall dieser parallel geschaltete Verbraucher dadurch keinen Strom an Trägermedium erhält, so dass im Strömungsaufteiler der komplette Strom des Trägermediums zu einem nachfolgenden Strömungsaufteiler geleitet wird.

Eine derartige Anlage kann in vorteilhafter Weise durch gezieltes Mischen von Teilströmen des Trägermediums, welche noch nicht energieabgeladen sind, mit energieabgeladenen Teilströmen des Trägermediums so gemischt werden, dass für nachfolgende Verbraucher gezielte Energieniveaus eben durch Mischen dieser Teilströme erreicht werden können. Damit ist eine hohe Flexibilität und sehr verbrauchsgenaue Einstellung des Bedarfs der angeschlossenen Verbraucher möglich, ohne dass ein hochkomplexes Rohrleitungssystem vorzusehen wäre.

Der steuerbare Strömungsaufteiler ist gemäß einer Weiterbildung der Erfindung auf Basis von Temperatur- bzw. Temperaturdifferenzsignalen steuerbar, wobei in der Hauptleitung jeweils vor einem Strömungsaufteiler und in der Vorlaufleitung vor jedem Verbraucher sowie in der Rücklaufleitung nach jedem Verbraucher Temperatursensoren angeordnet sind. Es ist jedoch auch möglich, im Bereich der Mischungsstelle, in welcher die Rücklaufleitung vom Verbraucher in die Hauptleitung mündet, ebenfalls einen Temperatursensor vorzusehen. Vorzugsweise sind des weiteren an den Stellen in der Anlage, an welchen Teilströme von der Hauptströmung des Trägermediums abgezweigt oder an Mischungsstellen wieder zusammengeführt werden, zusätzlich Durchflussmesser vorgesehen.

Der steuerbare Strömungsaufteiler wird gemäß einem Ausführungsbeispiel der Erfindung vorzugsweise durch ein Signal auf der Basis einer Temperaturdifferenz zwischen dem Eintritt in den Verbraucher und dem Austritt aus dem Verbraucher gesteuert. Mittels diesem Signal wird der dem Verbraucher zugeführte Teilstrom des Trägermediums in Abhängigkeit von der Temperaturdifferenz zwischen Eintritt in den und Austritt aus dem Verbraucher oder in Abhängigkeit von einer an der Mischungsstelle von Rücklaufleitung und Hauptleitung gewünschter Temperatur gesteuert.

Gemäß einem weiteren Ausführungsbeispiel der Erfindung ist in der Vorlaufleitung zum jeweiligen Verbraucher vorzugsweise eine Pumpe angeordnet. Diese Pumpe führt den von dem jeweiligen Strömungsaufteiler zum Verbraucher vom Hauptstrom des Trägermediums in der Hauptleitung abgezweigten Teilstrom dem Verbraucher zu, pumpt diesen Strom durch den Verbraucher in die Rücklaufleitung, welche über eine Bypass-Leitung mit der Vorlaufleitung zu dem Verbraucher verbunden ist. Die Pumpe zirkuliert also den vom Strömungsaufteiler über die Vorlaufleitung zum Verbraucher geleiteten Teilstrom und diesen aus dem Verbraucher in die Rücklaufleitung und von dort über die Bypass-Leitung wieder über die Vorlaufleitung zu dem Verbraucher. Der Förderstrom der Pumpe wird dabei über ihre Drehzahl mittels eines Signals auf Basis einer Temperaturdifferenz zwischen Eintritt in den Verbraucher und Austritt aus dem Verbraucher geregelt. Die Zirkulation des Stromes des Trägermediums durch den Verbraucher kann damit so gesteuert werden, dass der von dem Strömungsaufteiler abgezweigte Teilstrom mehrfach durch den Verbraucher zirkuliert wird, wobei zumindest ein Teil des noch energieaufgeladenen Teilstromes vom Strömungsverteiler bei jeder Zirkulation dem Kreislauf zugemischt wird, so dass je nach gewünschter Temperatur-Zeit-Kurve des Aufladens des Verbrauchers mehr oder weniger des Teilstromes dem zirkulierenden Strom zugemischt wird.

An der Mündung der Bypass-Leitung in die Vorlaufleitung erfolgt eine Mischung zwischen dem Teilstrom vom Strömungsaufteiler und dem rückgeführten, im Verbraucher energiemäßig abgeladenen Teilstrom. Gleichzeitig wird der Volumenstrom der Pumpe so eingestellt bzw. ist die Pumpe so gesteuert bzw. geregelt, dass ein Teil des energiemäßig abgeladenen Teilstromes über die Rücklaufleitung wieder der Hauptleitung an der Mischungsstelle, in welche die Rücklaufleitung in die Hauptleitung mündet, zugeführt wird.

Vorzugsweise ist das Signal zur Steuerung des Strömungsaufteilers mit dem Signal zur Steuerung der Pumpe identisch. Der Strömungsaufteiler und die Pumpe werden vorzugsweise so gesteuert, dass entweder ein vorgegebener Temperatur-Zeit-Verlauf im Verbraucher, d. h. dessen zeitabhängige Energieaufladung gemäß vorgegebener Kurve, erreicht wird oder dass an der Mischungsstelle, an welcher die Rücklaufleitung vom Verbraucher in die Hauptleitung mündet, eine vorgegebene Temperatur, d. h. ein Energieniveau des Stromes des Trägermediums in der Hauptleitung erreicht wird, welcher auf die Bedürfnisse des oder der nachfolgenden Verbraucher abgestimmt ist.

Vorzugsweise sind der Strömungsaufteiler und die Pumpe so gesteuert, dass in dem Verbraucher eine vorgegebene Maximaltemperatur nicht überschritten wird. Das ist beispielsweise besonders vorteilhaft, wenn es sich bei dem Verbraucher um einen Warmwasserspeicher mit Wärmetauscher handelt, in welchem durch die Begrenzung des Aufladens bis zur Maximaltemperatur Kesselsteinbildung verhindert oder stark reduziert wird.

Dazu kann beispielsweise auch die Steuerung des Strömungsaufteilers und der Pumpe in der Weise dienen, dass an der Mischungsstelle eine vorgegebene Solltemperatur erzielbar ist. Die vorgegebene Solltemperatur kann beispielsweise eine solche Höhe haben, dass für einen nachfolgenden Verbraucher insbesondere bei einem hohen Energieniveau des Trägermediums eben diese Kesselsteinbildung vermieden wir, und zwar beispielsweise in einem Fall, in welchem ein nachfolgender Verbraucher ein Warmwasserspeicher ist, wohingegen der diesem vorgeschaltete Verbraucher anderen Zwecken dient.

Erfindungsgemäß weist die Anlage in der Regel mehrere Verbraucher auf, in welchem stufenweise durch Mischen bestimmter Teilströme des Trägermediums eine Energieabladung des von der Wärmequelle kommenden energiemäßig aufgeladenen Stromes des Trägermediums realisiert wird. Je nach Energiebedarf in den einzelnen Verbrauchern, d. h. je nach dem Grad der erfolgten Energieabladung in den jeweiligen Verbrauchern ist es möglich, dass nach dem letzten in der Anlage derartig angeordneten Verbraucher das Trägermedium noch ein Energieniveau aufweist, welches noch sinnvoll nutzbar ist. Dazu ist gemäß einer Weiterbildung vor dem Eintritt des Trägermediums in die Rückleitung zur Wärmequelle ein zusätzlicher Strömungsaufteiler vorgesehen, mittels welchem das Trägermedium über eine zusätzliche Pumpe hoher Kapazität durch einen eine Sole bildenden Verbraucher geleitet wird. D. h. das nach den entsprechenden Verbrauchern im Trägermedium noch vorhandene Energieniveau wird zum Aufladen eines Speichers vorzugsweise Erdspeichers in fester oder flüssiger Form wie z. B. einer Sole verwendet. Die Rücklaufleitung von dem Speicher mündet dann in dem Teil der Rückleitung unmittelbar hinter dem zusätzlichen Strömungsaufteiler. Durch die hohe Kapazität der Pumpe kann erreicht werden, dass eine komplette Energieladung des Trägermediums in dem Speicher erfolgt und innerhalb des Speichers auch eine möglichst gleichmäßige Verteilung der über das Trägermedium in den Speicher eingeleiteten Energie erfolgt. Vorzugsweise wird also das Trägermedium vollständig durch den Speicher zirkuliert, wobei die Leistung der zusätzlichen Pumpe größer ist als die der Pumpen für die Verbraucher. Diese zusätzliche Pumpe ist wiederum über Signale von entsprechenden Temperatursensoren im Bereich des zusätzlichen Strömungsaufteilers und vor Eintritt in die Sole und nach Austritt aus der Sole sowie gegebenenfalls auch an der Stelle, an der die Rücklaufleitung von dem Speicher in die Rückleitung mündet, gesteuert. Aufgrund der vorzugsweise deutlich größeren Leistung dieser zusätzlichen Pumpe gegenüber den Pumpen der Verbraucher und sogar gegenüber der der Hauptpumpe ist eine Bypass-Leitung nicht erforderlich, weil der hydraulische Ausgleich der Wassermengen und der Drücke in dem zusätzlichen Strömungsaufteiler stattfindet.

Für das Zirkulieren des Trägermediums durch die erfindungsgemäße Anlage ist vorzugsweise in der Rückleitung zur Wärmequelle eine Hauptpumpe vorgesehen, mittels welcher das Trägermedium von der Wärmequelle über die Hauptleitung und die Rückleitung wieder zurück zur Wärmequelle zirkuliert wird. Vorzugsweise ist diese Hauptpumpe ebenfalls steuerbar, und zwar in Abhängigkeit von den jeweiligen Volumenströmen oder Temperaturdifferenzen, welche in den entsprechenden Verbrauchern zur Erzielung eines vorgegebenen Temperatur-Zeit-Verlaufs erforderlich sind.

Insbesondere für Wartungs- und Reparaturzwecke sind in den jeweiligen Vorlaufleitungen zu den Verbrauchern und den jeweiligen Rücklaufleitungen von den Verbrauchern Absperrventile vorgesehen, wobei diese Absperrventile vorzugsweise manuell betätigbar sind.

Vorzugsweise ist die Wärmequelle ein Sonnenkollektor bzw. eine Sonnenkollektoranlage. Vorzugsweise sind die Sonnenkollektoren so ausgebildet, dass sie mit dem Sonnenstand jahreszeitabhängig mitgeführt werden können, um eine möglichst hohe Energieausbeute, d. h. ein möglichst hohes Energieaufladen des Trägermediums zu erreichen. Zusätzlich kann vorzugsweise ein Erdspeicher vorgesehen sein, wobei der Erdspeicher insbesondere auch dann von Vorteil ist, wenn zusätzlich eine Wärmepumpe mit Verdampfer, Kompressor, Enthitzer und Kondensator vorgesehen ist. Der Verdampfer der Wärmepumpe kann zusätzlich mit einem Verbraucher für Kälteenergie verbunden sein, so dass eine weitere hohe Flexibilität der Anlage für verschiedenste Energieniveaus realisierbar ist.

Gemäß noch einer Weiterbildung der Erfindung ist in der Bypass-Leitung von der Rücklaufleitung vom Verbraucher zu der Vorlaufleitung zu dem Verbraucher ein Bypass-Regelventil angeordnet, welches im Zusammenwirken mit der Pumpe und dem Strömungsaufteiler eine zusätzliche Einflussnahme auf die Mischung des frischen, von der Hauptleitung stammenden energieaufgeladenen Stromes an Trägermedium und dem im Verbraucher energiemäßig abgeladenen Strom an Trägermedium ermöglicht. An der Mündungssstelle des Bypasses in der Vorlaufleitung ist vorzugsweise eine Mischkammer vorgesehen. Diese Mischkammer dient dazu, dass der vom Verbraucher energiemäßig abgeladene Strom an Trägermedium vollständig mit dem energiemäßig aufgeladenen Teilstrom, welcher aus der Hauptleitung aus dem Strömungsaufteiler in die Vorlaufleitung zu dem Verbraucher abgezweigt worden ist, gemischt werden kann. Vorzugsweise ist die Mischkammer horizontal oder vertikal ausgebildet.

Weitere Vorteile, Merkmale und Anwendungsmöglichkeiten der Erfindung werden nun detailliert anhand der beigefügten Zeichnungen erläutert. In der Zeichnung zeigen:
- Figur 1: ein prinzipielles Schema einer Anlage gemäß der Erfindung mit drei jeweils parallel zur Hauptleitung geschalteten Verbrauchern;
- Figur 2: eine Anlage in der prinzipiellen Schaltung gemäß Figur 1, jedoch mit der Möglichkeit des Anschlusses von vier Verbrauchern, wobei die Strömungsaufteiler jeweils unterschiedliche Positionen haben, und zusätzlich einem Strömungsaufteiler für einen Kreislauf mit Pumpe zur Energieaufladung eines Erdspeichers insbesondere in Form einer Sole; und
- Figur 3: ein Detail X gemäß Figur 1 mit Strömungsaufteiler in der Hauptleitung für einen ersten Verbraucher und Mischkammer in der Vorlaufleitung zu diesem Verbraucher mit Anschluss der Bypass-Leitung von der Rücklaufleitung von dem Verbraucher in die Vorlaufleitung.

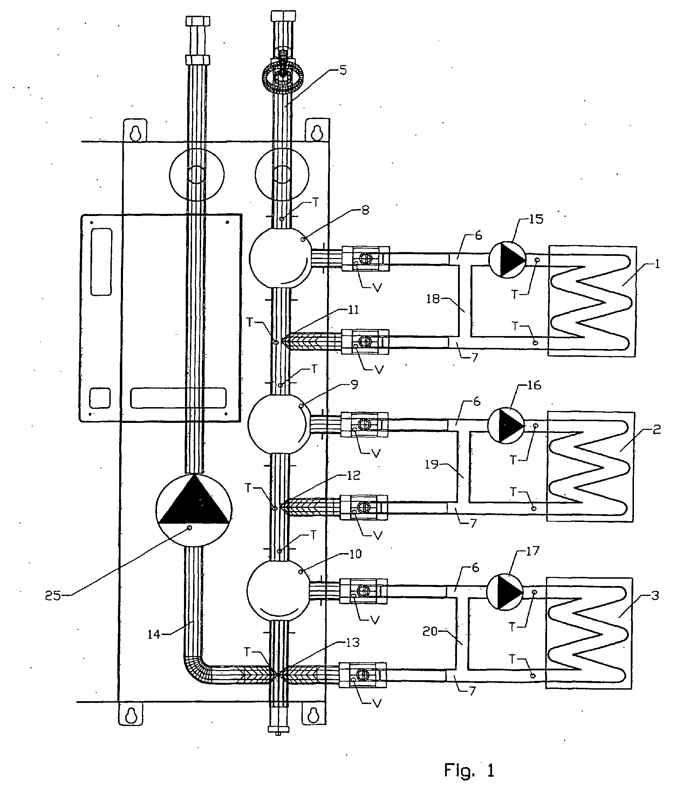

In Figur 1 ist die prinzipielle Anordnung einer erfindungsgemäßen Anlage dargestellt. Von einer nicht dargestellten Wärmequelle in Form beispielsweise eines Sonnenkollektors gelangt das darin energiemäßig aufgeladene Trägermedium in eine Hauptleitung 5. In dieser Hauptleitung 5 sind in Reihe hintereinander drei Strömungsaufteiler 8, 9, 10 angeordnet, an welche jeweils über eine Vorlaufleitung 6 ein jeweiliger Verbraucher 1, 2, 3 angeschlossen ist. Bei den Strömungsaufteilern 8, 9, 10 handelt es sich um sogenannte Umschalt-Misch-Ventile, welche in ihrem prinzipiellen Aufbau dem eines Drehschiebers ähneln. Das im Innern des Strömungsaufteilers drehbar angeordnete Drehschieberelement ist in dem Strömungsaufteiler 8 so angeordnet, dass der von der Hauptleitung 5 in den Strömungsaufteiler 8 eintretende Strom an Trägermedium aufgeteilt wird, und zwar in einen ersten Teilstrom, welcher in die Vorlaufleitung 6 zu dem ersten Verbraucher 1 geführt wird, und einen zweiten Teilstrom, welcher aus dem Strömungsaufteiler 8 in einen weiteren Bereich der Hauptleitung 5 austritt.

In der Vorlaufleitung 6, welche von dem Strömungsaufteiler 8 zu dem ersten Verbraucher 1 führt, ist des weiteren eine Pumpe 15 angeordnet. In Strömungsrichtung vor der Pumpe mündet eine Bypass-Leitung 18, welche eine Rücklaufleitung 7 von dem Verbraucher 1 zu dem Bereich der Hauptleitung 5 zwischen dem Strömungsaufteiler 8 und 9 führt. Je nach dem eingestellten oder angesteuerten oder eingeregelten Volumenstrom der Pumpe 15 wird der von dem Strömungsaufteiler 8 in die Vorlaufleitung 6 strömende Teilstrom an Trägermedium durch den Verbraucher 1 und zurück über die Rücklaufleitung 7 und die Bypass-Leitung 18 wieder in den Teilstrom an Trägermedium vor der Pumpe 15 eingespeist. Die Rücklaufleitung 7 von dem Verbraucher 1 mündet an einer Mischungsstelle 11 in dem Bereich der Hauptleitung 5 zwischen dem ersten Strömungsaufteiler 8 und dem zweiten Strömungsaufteiler 9.

Vor dem Strömungsaufteiler 8, vor dem Eintritt in den Verbraucher 1 und nach dem Austritt aus dem Verbraucher 1 sowie an der Mischungsstelle 11 ist jeweils zumindest ein Temperatursensor angebracht. Für Temperatur- und/oder Instandhaltungszwecke ist sowohl in der Vorlaufleitung 6 als auch in der Rücklaufleitung 7 ein Absperrventil V angeordnet. Die vorzugsweise manuell betätigbaren Absperrventile V sperren im geschlossenen Zustand eine Zufuhr von Trägermedium aus der Hauptleitung 5 in den Verbraucher 1 ab.

Im Bereich zwischen dem Strömungsaufteiler 8 für den Verbraucher 1 und den Strömungsaufteiler 9 für den Verbraucher 2 liegt eine Mischungsstelle 11, an welcher die Rücklaufleitung 7 von dem Verbraucher 1 in dem Stück der Hauptleitung 5 zwischen dem Strömungsaufteiler 8 und dem Strömungsaufteiler 9 mündet. An diesem Bereich der Mischungsstelle 11 erfolgt eine Mischung des vom Verbraucher 1 rückgeführten Stromes an Trägermedium in einem energieabgeladenen Zustand mit dem nicht energieabgeladenen Strom an Trägermedium in der Hauptleitung 5, welcher als Teilstrom den Strömungsaufteiler 8 verlässt. Der Strömungsaufteiler 8 kann nun so gesteuert werden, dass der in die Vorlaufleitung 6 zu dem Verbraucher 1 geleitete Teilstrom an Trägermedium eine derartige Größe hat, dass in dem Verbraucher 1 ein gewünschtes Temperatur-Zeit-Verhalten mit hoher Genauigkeit erreicht wird. Der Teilstrom kann auch während des Energieabladens in dem Verbraucher 1 über die Veränderung der Stellung des Strömungsaufteilers 8 variiert werden, insbesondere wenn in dem Verbraucher 1 beispielsweise zusätzlich eine Entnahme an Warmwasser erfolgt. Des Weiteren kann der Teilstrom, welcher vom Strömungsaufteiler 8 in die Vorlaufleitung 6 zum Verbraucher 1 abgezweigt wird, so gewählt werden, dass neben einem bestimmten Temperatur-Zeit-Verhalten in dem Verbraucher 1 eine gewünschte Temperatur des Trägermediums an der Mischungsstelle 11 erreicht wird. Des Weiteren kann der Teilstrom in die Vorlaufleitung 6 so eingestellt bzw. geregelt werden, dass eine bestimmte maximale Temperatur in dem Verbraucher 1 nicht überschritten wird. Dies ist insbesondere dann sinnvoll, wenn als Obergrenze der Temperatur ein Wert festgelegt ist, bei welchen beispielsweise Kesselsteinbildung gerade noch im Wesentlichen vermieden wird. Mit dieser Möglichkeit des Mischens und/oder Rezirkulierens eines Stromes/Teilstromes an Trägermedium kann mit hoher Genauigkeit dem Bedarf eines, mehrerer oder aller Verbraucher sehr genau entsprochen werden, und zwar auch und vor allem für Energieniveaus für die jeweiligen Verbraucher, welche nicht denen von zuströmenden, energieaufgeladenen zur Verfügung stehenden Teilströmen an Trägermedium entsprechen.

Der Strömungsaufteiler 9 ist in der Hauptleitung 5 vorgesehen, um einen Verbraucher 2 mit einem entsprechenden Teilstrom je nach Bedarf bzw. je nach gewünschtem Temperatur-Zeit-Verhalten zu versorgen. Der Verbraucher 2 ist analog zu dem Verbraucher 1 parallel zu der Hauptleitung 5 mit einer Vorlaufleitung 6 von dem Strömungsaufteiler 9 zu dem Verbraucher 2 und einer Rücklaufleitung 7 von dem Verbraucher 2 zu dem Teil der Hauptleitung 5 versehen, welcher zwischen dem Strömungsaufteiler 9 und dem nachfolgenden Strömungsaufteiler 10 liegt, wobei die Rücklaufleitung 7 vom Verbraucher 2 in eine Mischungsstelle 12 mündet. Analog zu der Funktion für den Verbraucher 1 ist in der Vorlaufleitung eine Pumpe 16 und eine Bypass-Leitung 19 von der Rücklaufleitung 7 zur Vorlaufleitung 6 in Strömungsrichtung vor der Pumpe 16 vorgesehen. Temperatursensoren sind wiederum am Eintritt in den Strömungsaufteiler 9 sowie am Eintritt in den Verbraucher 2 und am Austritt aus dem Verbraucher 2 angeordnet. Für Wartungs- und Reparaturzwecke ist wiederum jeweils ein Absperrventil V in der Vorlaufleitung 6 und in der Rücklaufleitung 7 angeordnet. An der Mischungsstelle 12 befindet sich ebenfalls ein Temperatursensor.

Gemäß dem dargestellten Beispiel ist der Strömungsaufteiler 9 so geregelt bzw. eingestellt, dass kein Teilstrom in die Vorlaufleitung zum Verbraucher 2 von dem Strömungsaufteiler 9 geleitet wird, sondern diese Vorlaufleitung ist im Strömungsaufteiler 9 komplett abgesperrt. Dadurch passiert der gesamte in der Hauptleitung zwischen der Mischungsstelle 11 und dem Eintritt in den Strömungsaufteiler 9 eintretende Strom an Trägermedium den Strömungsaufteiler 9. Dieser Strom an Trägermedium wird der Mischungsstelle 12 zugeführt, an welcher wegen der abgesperrten Vorlaufleitung keine Mischung mit einem Teilstrom aus der Rücklaufleitung erfolgt.

In Strömungsrichtung nach der Mischungsstelle 12 ist ein weiterer Strömungsaufteiler 10 vorgesehen, welcher einen Teilstrom zu einem Verbraucher 3 leiten kann. Der prinzipielle Aufbau bzw. die prinzipielle Anordnung entspricht dabei dem bzw. der für den Verbraucher 1 oder den Verbraucher 2. Eine Vorlaufleitung 6 mit einer Pumpe 17 ist mit dem Eintritt in den Verbraucher 3 verbunden, wohingegen eine Rücklaufleitung vom Austritt aus dem Verbraucher in eine Mischungsstelle 13 in einem Stück der Hauptleitung 5 mündet, welches nach dem Strömungsaufteiler 10 angeordnet ist. Gleichermaßen ist eine Bypass-Leitung 20 als Verbindung zwischen der Rücklaufleitung 7 und der Vorlaufleitung 6 so angeordnet, dass die Bypass-Leitung in die Vorlaufleitung in Strömungsrichtung vor der Pumpe 17 in die Vorlaufleitung 6 eintritt. Temperatursensoren sind am Eintritt in den Strömungsaufteiler 10, am Eintritt in den Verbraucher 3 und am Austritt aus dem Verbraucher 3 sowie an der Mischungsstelle 13 angeordnet. Ebenso sind Absperrventile V in der Vorlaufleitung 6 und der Rücklaufleitung 7 angeordnet. Gemäß der dargestellten Stellung des Strömungsaufteilers 10 wird beispielhaft der gesamte im Verbraucher 1 energieabgeladene Strom an Trägermedium der Hauptleitung in die Vorlaufleitung 6 und damit den Verbraucher 3 geleitet. Dies wird dadurch erreicht, dass der Durchtritt durch den Strömungsaufteiler 10 durch den im Strömungsaufteiler 10 vorhandenen Drehschieber gesperrt ist. Von der Mischungsstelle 13 gelangt das im Verbraucher 3 weiter energieabgeladene Trägermedium über die Rückleitung 14 mit Hilfe der Pumpe 25 wieder in den Eintritt der nicht dargestellten Wärmequelle.

Die jeweiligen Stellungen des Drehschiebers in den Strömungsaufteilern 8, 9, 10 sind dabei nur beispielhaft angezeigt; es sind solche Stellungen des Drehschiebers in den Strömungsaufteilern möglich, dass jegliche Flexibilität hinsichtlich der Mischung von Teilströmen zurück von Verbrauchern und Strömen an Trägermedium in der Hauptleitung sowie Mischung von rezirkuliertem energieabgeladenen Teilströmen aus einem Verbraucher mit neuen, im jeweiligen Verbraucher noch nicht energieabgeladenen Teilströmen zu einem Verbraucher realisierbar sind. Es ist jedoch prinzipiell auch möglich, überhaupt keine Teilströme zu einem Verbraucher abzuzweigen, nämlich dann wenn dieser beispielsweise keinen Bedarf hat, oder aber den kompletten Strom zu einem Verbraucher zu schicken, wenn dieser diesem Bedarf bzw. dessen Temperatur-Zeit-Verhalten gerade entsprechen sollte.

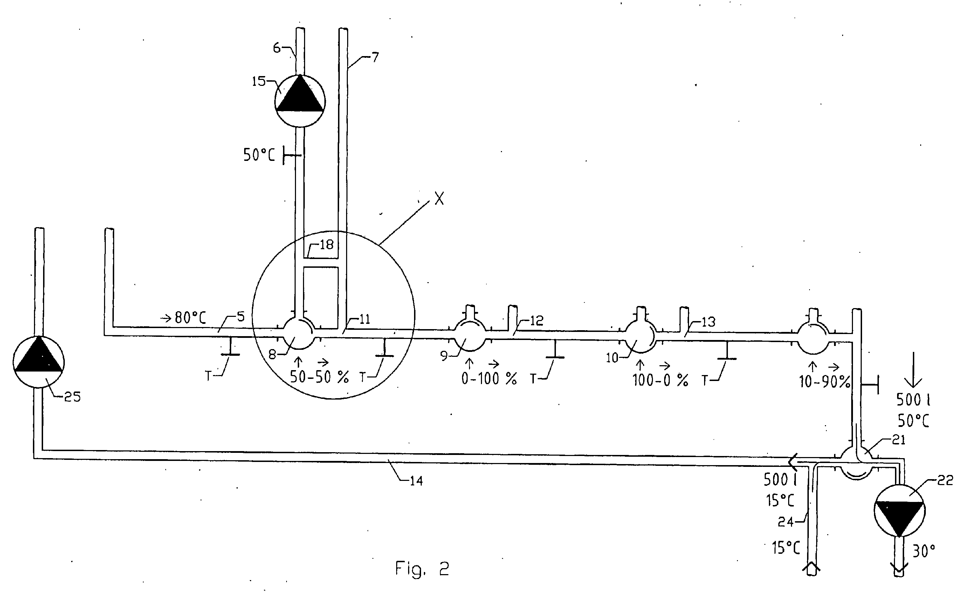

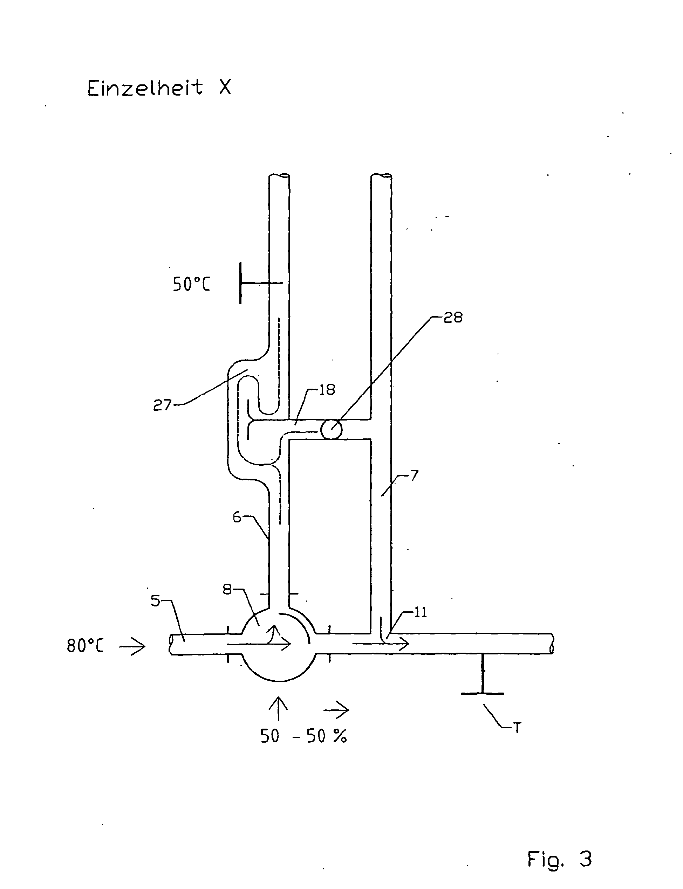

Figur 2 zeigt ein weiteres Ausführungsbeispiel, bei welchem zunächst in der Hauptleitung 5 vier Strömungsaufteiler 8, 9, 10, ... vorgesehen sind, welche jeweils für einen angeschlossenen Verbraucher angeordnet sind. Der Einfachheit halber sind die einzelnen Verbraucher nicht dargestellt, in der Einzelheit X, welche in vergrößertem Maßstab in der Figur 3 dargestellt ist, ist lediglich die Vorlaufleitung 6 mit der Pumpe 15 und der Rücklaufleitung 7 mit der Bypass-Leitung 18 von der Rücklaufleitung 7 zur Vorlaufleitung 6 in Strömungsrichtung vor der Pumpe 15 sowie die die Mischungsstelle 11 charakterisierende Mündung der Rücklaufleitung 7 in der Hauptleitung 5 dargestellt.

Beispielhaft sind vier verschiedene Stellungen des Drehschiebers in den jeweiligen Strömungsaufteilern 8, 9, 10, ... dargestellt. So ist im Strömungsaufteiler 8 der Drehschieber so angeordnet bzw. so eingeregelt bzw. so gesteuert, dass der Strom an Trägermedium von der Hauptleitung 5 im Verhältnis an 50 Prozent zu 50 Prozent in einen Teilstrom für den Verbraucher 1 (nicht dargestellt) und einen Teilstrom aus dem Strömungsaufteiler 8 in Richtung auf die Mischungsstelle 11 aufgeteilt wird.

Der Drehschieber im Strömungsaufteiler 9 ist so gestaltet, dass null Prozent des in den Strömungsaufteilern 9 eintretenden Stromes an Trägermedium für den zweiten Verbraucher (nicht dargestellt) abgezweigt werden, so dass 100 Prozent des von der Mischungsstelle 11 ankommenden Stromes an Trägermedium von dem Strömungsaufteiler 9 zum Strömungsaufteiler 10 strömen. Dabei können die 100 Prozent des Stromes an Trägermedium aufgrund beispielsweise einer Entnahme von Warmwasser im Verbraucher 1 weniger sein als der von der Wärmequelle über die Hauptleitung 5 in den Strömungsaufteiler 8 eintretende Strom an Trägermedium.

Der Strömungsaufteiler 10 ist beispielhaft mit seinem Drehschieber so dargestellt, dass 100 Prozent des in den Strömungsaufteiler 10 eintretenden Stromes an Trägermedium dem dem Strömungsaufteiler 10 zugehörigen Verbraucher zugeführt werden. Von diesem Verbraucher wird der in dem Verbraucher energetisch abgeladene Strom an Trägermedium über die Mündungsstelle der Rücklaufleitung von diesem Verbraucher in den Abschnitt der Hauptleitung 5 zwischen dem Strömungsaufteiler 10 und dem diesen nachfolgenden vierten Strömungsaufteiler (nicht bezeichnet) eingeleitet. Dieser Mündungspunkt entspricht im Falle der Durchleitung eines Teilstromes durch den Strömungsaufteiler 10 der Mischungsstelle 13.

Im vierten nicht bezeichneten Strömungsaufteiler ist der Drehschieber so dargestellt, dass 10 Prozent des in diesen eintretenden Stromes an Trägermedium einem vierten Verbraucher zugeführt werden, wohingegen 90 Prozent des in den Strömungsaufteiler eintretenden Stromes durch diesen hindurchgeleitet werden, wobei diese 90 Prozent mit den in dem dem vierten Strömungsaufteiler zugeordneten Verbraucher energetisch abgeladenen Strom an Trägermedium in der ebenfalls nicht gezeichneten Mischungsstelle gemischt werden.

Von der Mischungsstelle gelangt das energetisch in drei Verbrauchern (der dem Strömungsaufteiler 9 zugeordnete Verbraucher trägt aufgrund seiner Absperrung nicht zur Energieabladung bei) abgeladene Trägermittel zu einem weiteren zusätzlichen Strömungsaufteiler 21, dessen Drehschieber so dargestellt ist, dass der Strom an Trägermedium über eine Pumpe 22 hoher Kapazität beispielsweise einer Sole (nicht dargestellt) zugeführt wird, in welcher die endgültige Energieabladung des Trägermediums bzw. dieses Stroms des Trägermediums durch Mischen erfolgt. Von der Sole erfolgt eine Rückströmung des energetisch von beispielsweise 30 °C auf 15 °C abgeladenen Stromes an Trägermedium über die Rücklaufleitung 24 zur Mischung mit dem Strom, welcher dem Strömungsaufteiler 21 von den vorhergehenden Verbrauchern 1, 2, 3, ... zuströmt. Von der Mischungsstelle der Rücklaufleitung in die Rückleitung 14 wird mittes der Pumpe 25 der energetisch abgeladene Trägermittelstrom wieder der Wärmequelle zugeführt.

Aus Figur 2 ist ersichtlich, dass eine hohe Flexibilität für eine jeglichen Anwendungsbedürfnissen entsprechende Vielfalt an Verbrauchern und Verbraucherfunktionen und Verbraucherbedürfnissen ermöglicht wird, wobei mittels des Prinzips der Teilstromzumischung an definierten Stellen definierte Energieniveaus für nachfolgende Verbraucher zielgerichtet und genau einstellbar sind.

In Figur 3 ist die in Figur 2 dargestellte Einzelheit X vergrößert gezeichnet. Von der Hauptleitung 5 gelangt ein Trägermittelstrom mit einer Temperatur von beispielsweise 80 °C in den Strömungsaufteiler 8, welcher beispielsweise auch als Misch-Umschalt-Ventil bezeichnet wird. Der Drehschieber in dem Strömungsaufteiler 8 ist dabei gemäß Figur 2 so eingeregelt, dass der von der Hauptleitung 5 eintretende Strom an Trägermedium zu 50 Prozent in die Vorlaufleitung 6 und zu 50 Prozent durch den Strömungsaufteiler 8 in die Hauptleitung nach dem Strömungsaufteiler 8 aufgeteilt wird. Die Vorlaufleitung 6 führt zu dem nicht dargestellten Verbraucher, von welchem die Rücklaufleitung 7 an der Mischungsstelle 11 in den Abschnitt der Hauptleitung 5 nach dem Strömungsaufteiler 8 mündet. Die Rücklaufleitung 7 ist über die Bypass-Leitung 18 mit der Vorlaufleitung 6 verbunden, wobei an der Mündungsstelle der Bypass-Leitung 18 in die Vorlaufleitung 6 eine Mischkammer 27 vorgesehen ist. Die Mischkammer ist vorzugsweise horizontal oder vertikal angeordnet. Die Mischkammer 27 dient dazu, dass der über die Bypass-Leitung 18 von der Rücklaufleitung 17 in die Vorlaufleitung 6 rezirkulierte, im nicht dargestellten Verbraucher energetisch abgeladene Strom an Trägermedium mit dem 50 prozentigen Teilstrom von dem Strömungsaufteiler 8, welcher energetisch noch nicht abgeladen worden ist, komplett gemischt werden kann. Einerseits über die Volumstromregelung der in Figur 3 ebenfalls nicht dargestellten Pumpe 15 und andererseits in einem in der Bypass-Leitung 18 zusätzlich vorgesehenen Bypass-Regler 28 wird die Rezirkulation so eingestellt, dass beispielsweise hinter der Mischkammer vor dem Eintritt in den Verbraucher eine definierte Temperatur von 50 °C erreicht werden kann.

Somit ist es mit dem erfindungsgemäßen auf Basis der Mischung von Teilströmen vorgesehenen Anlagensystem möglich, durch Mischen von energetisch aufgeladenen Teilströmen des Trägermediums mit energetisch abgeladenen Teilströmen an Trägermedium definierte Temperaturen zu erreichen. Jede Art von Verbraucheranforderung kann damit in kostengünstiger Weise mit einem relativ niedrigen Aufwand an Rohrleitungen und Armaturen erreicht werden.

Es versteht sich, dass zur Regelung bestimmter Temperaturen für Verbraucher oder an bestimmten Stellen der Anlage zusätzliche Temperatursensoren oder auch Strömungssensoren angebracht sind, und zwar zusätzlich zu den bisher in Verbindung mit der Beschreibung von Figur 1 und Figur 2 erwähnten Sensoren. Gemäß Figur 3 sind lediglich Temperatursensoren nach der Mischkammer 27 und nach der Mischungsstelle 11 angeordnet. Vorzugsweise wird der Bypass-Regler über das selbe Signal geregelt, welches für die Regelung des Strömungsaufteilers 8 und der Pumpe 15 verwendet wird.

Zur Verdeutlichung der Flexibilität der Anlage wird beispielhaft auf die Steuerung eines gewünschten Aufheizvorganges eines Boilers ohne Warmwasserentnahme sowie eines Beispiels mit Warmwasserentnahme und ein weiteres Beispiel eines ebenfalls möglichen Verbrauchers hingewiesen.

## Patentansprüche

1. Anlage zur Versorgung von Verbrauchern (1, 2, 3, ...) mit Wärmeenergie unterschiedlicher Energieanforderungen, welche von einem in einer Wärmequelle erwärmten Trägermedium durchströmt wird, das über eine Austrittsleitung aus der Wärmequelle eine Hauptleitung (5) durchströmt, in welcher für jeden parallel zu der Hauptleitung (5) mit jeweiliger Vorlaufleitung (6) und Rücklaufleitung (7) angeordneten Verbraucher (1, 2, 3, ...) in Serie jeweils ein steuerbarer Strömungsaufteiler (8, 9, 10, ...) angeordnet ist und von welcher über den Strömungsaufteiler (8, 9, 10, ...) in zumindest einen Verbraucher ein solcher Teilstrom des Trägermediums in die Vorlaufleitung (6) des Verbrauchers (1) abzweigbar ist, dass einem in der Reihenfolge vorausgehenden Verbraucher eine gewünschte Wärmemenge pro Zeiteinheit zugeführt wird oder dass an einer von der Rücklaufleitung (7) dieses Verbrauchers gespeisten und hinter dem Strömungsaufteiler (8, 9, 10, ...) liegenden Mischungsstelle (11, 12, 13, ...) in der Hauptleitung (5) durch gezieltes Mischen der Teilströme ein gewünschter Temperatur-Zeit-Verlauf des Trägermediums für einen nachfolgenden Verbraucher erreicht wird, und das Trägermedium nach erfolgter Energieabladung über eine Rückleitung (14) in die Wärmequelle wieder eintritt.

2. Anlage nach Anspruch 1, bei welcher zumindest in der Hauptleitung (5) vor jedem Strömungsaufteiler (8, 9, 10, ...) und in der Vorlaufleitung (6) vor jedem Verbraucher und in der Rücklaufleitung (7) von jedem Verbraucher ein Temperatursensor (T) angeordnet sind.

3. Anlage nach Anspruch 1 oder 2, bei welcher dem steuerbaren Strömungsaufteiler (8, 9, 10, ...) ein Signal auf Basis einer Temperaturdifferenz zwischen Eintritt in den und Austritt aus dem Verbraucher (1, 2, 3, ...) zuführbar ist, mittels welchem der dem Verbraucher (1, 2, 3, ...) zugeführte Teilstrom des Trägermediums in Abhängigkeit von der Temperaturdifferenz steuerbar ist.

4. Anlage nach Anspruch 1 oder 2, bei welcher in der Vorlaufleitung (6) zum jeweiligen Verbraucher (1, 2, 3, ...) eine Pumpe (15, 16, 17, ...) angeordnet ist, welche den von dem jeweiligen Strömungsaufteiler (8, 9, 10, ...) zum Verbraucher (1, 2, 3, ...) vom Hauptstrom des Trägermediums in der Hauptleitung (5) abgezweigten Teilstrom dem Verbraucher (1, 2, 3, ...) zuführt und über eine die Vorlaufleitung (6) zu diesem Verbraucher (1, 2, 3, ...) mit dessen Rücklaufleitung (7) kurzschließende Bypass-Leitung (18, 19, 20, ...) durch den Verbraucher (1, 2, 3, ...) zirkuliert, wobei die Pumpe (15, 16, 17, ...) mittels eines Signals auf Basis einer Temperaturdifferenz zwischen Eintritt in den und Austritt aus dem Verbraucher (1, 2, 3, ...) steuerbar ist und wobei an der Mündung der Bypass-Leitung (18, 19, 20, ...) in die Vorlaufleitung (6) eine Mischung zwischen dem Teilstrom vom Strömungsaufteiler (8, 9, 10, ...) und einem rückgeführten (zirkulierten) Teilstrom erfolgt.

5. Anlage nach Anspruch 3 oder 4, bei welcher das Signal zur Steuerung des Strömungsaufteilers (8, 9, 10, ...) und das Signal zur Steuerung der Pumpe (15, 16, 17,...) identisch sind.

6. Anlage nach Anspruch 5, bei welcher der Strömungsaufteiler (8, 9, 10, ...) und die Pumpe (15, 16, 17, ...) so gesteuert sind, dass in dem Verbraucher (1, 2, 3, ...) eine vorgegebene Maximaltemperatur nicht überschritten wird.

7. Anlage nach Anspruch 5, bei welcher der Strömungsaufteiler (8, 9, 10, ...) und die Pumpe (15, 16, 17, ...) so gesteuert sind, dass an der Mischungsstelle (11, 12, 13, ...) eine vorgegebene Solltemperatur erzielbar ist.

8. Anlage nach einem der Ansprüche 4 bis 7, bei welcher in der Bypass-Leitung (18, 19, 20,...) ein Bypass-Regler vorgesehen ist.

9. Anlage nach Anspruch 8, bei welcher der Bypass-Regler (26, ...) insbesondere in Abhängigkeit von der Temperatur/Temperaturdifferenz im Trägermedium steuerbar ist.

10. Anlage nach einem der Ansprüche 4 bis 9, bei welcher die Bypass-Leitung (18, 19, 20, ...) in eine in der Vorlaufleitung (6) angeordnete Mischkammer (27) mündet.

11. Anlage nach einem der Ansprüche 3 bis 10, bei welcher vor Eintritt des Trägermediums in die Rückleitung (14) zur Wärmequelle ein zusätzlicher Strömungsaufteiler (21) angeordnet ist, mittels welchem das Trägermedium über eine zusätzliche Pumpe (22) durch einen Speicher, insbesondere eine Sole (23) bildenden Verbraucher leitet, deren Rücklaufleitung (24) in dem Teil der Rückleitung (14) unmittelbar hinter dem zusätzlichen Strömungsaufteiler (21) mündet.

12. Anlage nach Anspruch 11, bei welcher die zusätzliche Pumpe (22) so ausgelegt ist, dass das Trägermedium vollständig durch die Sole (23) zirkulierbar ist, wobei die Leistung der zusätzlichen Pumpe (22) größer ist als die Leistung der Pumpen (15, 16, 17, ...) für die jeweiligen Verbraucher (1, 2, 3,...).

13. Anlage nach einem der Ansprüche 1 bis 12, bei welcher in der Rückleitung (14) zur Wärmequelle eine Hauptpumpe (25) zum Zirkulieren des Trägermediums von der Wärmequelle über die Hauptleitung (5) und die Rückleitung (14) wieder zurück zur Wärmequelle vorgesehen ist.

14. Anlage nach einem der Ansprüche 1 bis 13, bei welcher die jeweilige Vorlaufleitung (6) zu den Verbrauchern (1, 2, 3, ...) und die jeweilige Rücklaufleitung (7) von den Verbrauchern (1, 2, 3, ...) jeweils mit einem Absperrventil (V) versehen sind.

15. Anlage nach einem der Ansprüche 1 bis 14, bei welcher die Wärmequelle ein Sonnenkollektor ist.

16. Anlage nach einem der Ansprüche 1 bis 15, bei welcher zusätzlich ein Erdspeicher vorgesehen ist.

17. Anlage nach einem der Ansprüche 1 bis 16, bei welcher zusätzlich eine Wärmepumpe mit Verdampfer, Kompressor, Enthitzer und Kondensator vorgesehen ist.

18. Anlage nach Anspruch 17, bei welcher an den Verdampfer ein Verbraucher für Kälteenergie angeschlossen ist.

## Claims

1. System for the supply of consumers (1, 2, 3, ...) with thermal energy for different energy requirements, through which system a support medium heated in a heat source flows via an outlet pipe from the heat source through a main pipe (5), comprising a regulatable flow distributor (8, 9, 10, ...) for each consumer (1, 2, 3, ...) arranged parallel to the main pipe (5) and having a feed pipe (6) and a return pipe (7) arranged in series in each case, and from which a partial stream of the support medium is capable of being branched off via the flow distributor (8, 9, 10, ...) into the feed pipe (6) of the consumer (1) into at least one consumer, such that a desired quantity of thermal energy per unit of time is delivered to a first consumer arranged upstream, or that a desired temperature/time cycle of the support medium for a subsequent consumer is achieved by the intentional mixing of the partial streams at a mixing point (11, 12, 13, ...) in the main pipe (5) supplied by the return pipe (7) of this consumer and lying behind the flow distributor (8, 9, 10, ...), and that after energy discharge the support medium is returned into the heat source via a return pipe (14).

2. System according to Claim 1, in which a temperature sensor (T) is arranged at least in the main pipe (5) ahead of each flow distributor (8, 9, 10, ...) and in the feed pipe (6) ahead of each consumer and in the return pipe (7) from each consumer.

3. System according to Claims 1 or 2, in which a signal on the basis of a difference in temperature between the entry into and the outlet from the consumer (1, 2, 3, ...) can be supplied to the regulatable flow distributor (8, 9, 10, ...), by means of which signal the partial stream of the support medium supplied to the consumer (1, 2, 3, ...) is regulatable depending on the difference in temperature.

4. System according to Claims 1 or 2, in which arranged in the feed pipe (6) to each consumer (1, 2, 3, ...) is a pump (15, 16, 17, ...), which supplies the partial stream branched off from the flow distributor (8, 9, 10, ...) in each case to the consumer (1, 2, 3, ...) from the main flow of the support medium in the main pipe (5) to the consumer (1, 2, 3, ...) and circulates it through the consumer (1, 2, 3, ...) via a bypass pipe (18, 19, 20, ...) short-circuiting the feed pipe (6) to this consumer (1, 2, 3, ...) with its return pipe (7), the pump (15, 16, 17, ...) being regulatable by means of a signal on the basis of a difference in temperature between the entry into and the outlet from the consumer (1, 2, 3, ...), and mixing between the partial stream from the flow distributor (8, 9, 10, ...) and a returned (circulated) partial stream takes place at the mouth of the bypass pipe (18, 19, 20, ...) into the feed pipe (6).

5. System according to Claims 3 or 4, in which the signal for regulating the flow distributor (8, 9, 10, ...) and the signal for regulating the pump (15, 16, 17, ...) are identical.

6. System according to Claim 5, in which the flow distributor (8, 9, 10, ...) and the pump (15, 16, 17, ...) are regulated in such a way that a predetermined maximum temperature is not exceeded in the consumer (1, 2, 3, ...).

7. System according to Claim 5, in which the flow distributor (8, 9, 10, ...) and the pump (15, 16, 17, ...) are regulated in such a way that a predetermined reference temperature is capable of being achieved at the mixing point (11, 12, 13, ...).

8. System according to one of Claims 4 to 7, in which a bypass regulator is provided in the bypass pipe (18, 19, 20, ...).

9. System according to Claim 8, in which the bypass regulator (26, ...) is regulatable, in particular depending on the temperature/difference in temperature in the support medium.

10. System according to one of Claims 4 to 9, in which the bypass pipe (18, 19, 20, ...) discharges into a mixing chamber (27) arranged in the feed pipe (6).

11. System according to one of Claims 3 to 10, in which, ahead of the entry of the support medium into the return pipe (14) to the heat source, an additional flow distributor (21) is arranged, by means of which the support medium passes via a supplementary pump (22) through a reservoir, in particular a consumer constituting a brine heat exchanger (23), from which the return pipe (24) discharges in the part of the return pipe (14) directly after the supplementary flow distributor (21).

12. System according to Claim 11, in which the supplementary pump (22) is configured in such a way that the support medium in its entirety is capable of being circulated through the brine heat exchanger (23), in conjunction with which the output from the supplementary pump (22) is greater than the output from the pumps (15, 16, 17, ...) for the consumers (1, 2, 3, ...) in each case.

13. System according to one of Claims 1 to 12, in which a main pump (25) for circulating the support medium from the heat source via the main line (5) and the return pipe (14) and back to the heat source is provided in the return pipe (14) to the heat source.

14. System according to one of Claims 1 to 13, in which the feed pipe (6) in each case to the consumers (1, 2, 3, ...) and the return pipe (7) in each case from the consumers (1, 2, 3, ...) are provided in each case with a shut-off valve (V).

15. System according to one of Claims 1 to 14, in which the heat source is a solar panel.

16. System according to one of Claims 1 to 15, in which an underground reservoir is provided in addition.

17. System according to one of Claims 1 to 16, in which a heat pump with an evaporator, compressor, desuperheater and condenser is provided in addition.

18. System according to Claim 17, in which a consumer for refrigeration energy is connected to the evaporator.

## Revendications

1. Installation d'alimentation en énergie thermique de consommateurs (1, 2, 3, ...) qui ont différentes demandes en énergie, traversée par un fluide porteur chauffé dans une source de chaleur, lequel fluide sort de la source de chaleur par un conduit de sortie pour s'écouler dans un conduit principal (5) dans lequel des diviseurs d'écoulement (8, 9, 10, ...) asservis respectifs sont disposés en série pour chaque consommateur (1, 2, 3, ...) disposé en parallèle au conduit principal (5) et doté d'un conduit d'arrivée (6) et d'un conduit de retour (7), un écoulement partiel du fluide de transport pouvant être dévié dans au moins un consommateur par le diviseur d'écoulement (8, 9, 10, ...) et par le conduit d'arrivée (6) du consommateur (1) de manière à amener un débit souhaité de chaleur à un consommateur précédent de la série ou à obtenir une évolution souhaitée de la température du fluide de transport en fonction du temps pour un consommateur suivant sur un emplacement de mélange (11, 12, 13, ...) du conduit principal (5) alimenté par le conduit de retour (7) de ce consommateur et situé en aval du diviseur d'écoulement (8, 9, 10, ...), le fluide de transport retournant dans la source de chaleur par un conduit de retour (14) après avoir déchargé son énergie.

2. Installation selon la revendication 1, dans laquelle au moins une sonde de température (T) est disposée dans le conduit principal (5) au moins en amont de chaque diviseur d'écoulement (8, 9, 10, ...) et dans le conduit d'arrivée (6) en amont de chaque consommateur ainsi que dans le conduit de retour (7) de chaque consommateur.

3. Installation selon les revendications 1 ou 2, dans laquelle un signal basé sur la différence de température entre l'entrée dans le consommateur (1, 2, 3, ...) et la sortie de ce consommateur peut être amené au diviseur d'écoulement (8, 9, 10, ...) asservi et permet de commander en fonction de la différence de température le débit partiel de fluide de transport apporté au consommateur (1, 2, 3, ...).

4. Installation selon les revendications 1 ou 2, dans laquelle une pompe (15, 16, 17, ...) disposée dans le conduit d'arrivée (6) qui conduit à chaque consommateur (1, 2, 3, ...) amène au consommateur (1, 2, 3, ...) l'écoulement partiel dérivé de l'écoulement principal de fluide de transport dans le conduit principal (5) par le diviseur d'écoulement (8, 9, 10, ...) respectif de chaque consommateur (1, 2, 3, ...) et assure la circulation dans le consommateur (1, 2, 3, ...) par l'intermédiaire d'un conduit de dérivation (18, 19, 20, ...) qui met le conduit d'arrivée (6) qui conduit à ce consommateur (1, 2, 3, ...) en court-circuit avec son conduit de retour (7), la pompe (15, 16, 17, ...) pouvant être commandée au moyen d'un signal basé sur la différence de température entre l'entrée dans le consommateur (1, 2, 3, ...) et la sortie de ce consommateur, un mélange entre l'écoulement partiel qui provient du diviseur d'écoulement (8, 9, 10, ...) et un écoulement partiel de renvoi (recirculé) s'effectuant à l'embouchure du conduit de dérivation (18, 19, 20, ...) dans le conduit d'arrivée (6).

5. Installation selon les revendications 3 ou 4, dans laquelle le signal de commande du diviseur d'écoulement (8, 9, 10, ...) et le signal de commande de la pompe (15, 16, 17, ...) sont identiques.

6. Installation selon la revendication 5, dans laquelle le diviseur d'écoulement (8, 9, 10, ...) et la pompe (15, 16, 17, ...) sont commandés de telle sorte qu'une température maximale prédéterminée ne soit pas dépassée dans les consommateurs (1, 2, 3, ...).

7. Installation selon la revendication 5, dans laquelle le diviseur d'écoulement (8, 9, 10, ...) et la pompe (15, 16, 17, ...) sont commandés de telle sorte qu'une température de consigne prédéterminée puisse être atteinte à l'emplacement de mélange (11, 12, 13, ...).

8. Installation selon l'une des revendications 4 à 7, dans laquelle un régulateur de dérivation est prévu dans le conduit de dérivation (18, 19, 20, ...).

9. Installation selon la revendication 8, dans laquelle le régulateur de dérivation (26, ...) peut être commandé en particulier en fonction de la température et/ou de la différence de température du fluide de transport.

10. Installation selon l'une des revendications 4 à 9, dans laquelle le conduit de dérivation (18, 19, 20, ...) débouche dans une chambre de mélange (27) disposée dans le conduit d'arrivée (6).

11. Installation selon l'une des revendications 3 à 10, dans laquelle un diviseur d'écoulement (21) supplémentaire est disposé en amont de l'entrée du fluide de transport dans le conduit de retour (14) qui renvoie à la source de chaleur et permet par l'intermédiaire d'une pompe (22) supplémentaire d'envoyer le fluide de transport dans un accumulateur, en particulier un consommateur qui forme une saumure (23), et dont le conduit de retour (24) débouche dans la partie du conduit de retour (14) situé directement en aval du diviseur d'écoulement (21) supplémentaire.

12. Installation selon la revendication 11, dans laquelle la pompe supplémentaire (22) est conçue de telle sorte que la totalité du fluide de transport peut être mise en circulation dans la saumure (23), la capacité de la pompe (22) supplémentaire étant supérieure à la capacité des pompes (15, 16, 17, ...) des différents consommateurs (1, 2, 3, ...).

13. Installation selon l'une des revendications 1 à 12, dans laquelle une pompe principale (25) qui fait circuler le fluide de transport depuis la source de chaleur dans le conduit principal (5) et ensuite dans le conduit de retour (14) pour revenir vers la source de chaleur est prévue dans le conduit de retour (14) qui amène à la source de chaleur.

14. Installation selon l'une des revendications 1 à 13, dans laquelle chaque conduit d'amenée (6.) vers les consommateur (1, 2, 3, ...) et chaque conduit de retour (7) qui part des consommateurs (1, 2, 3, ...) est doté d'une vanne de blocage (V).

15. Installation selon l'une des revendications 1 à 14, dans laquelle la source de chaleur est un collecteur solaire.

16. Installation selon l'une des revendications 1 à 15, qui présente en outre un réservoir souterrain.

17. Installation selon l'une des revendications 1 à 16, qui présente de plus une pompe à chaleur avec évaporateur, compresseur, drain thermique et condenseur.

18. Installation selon la revendication 17, dans laquelle un consommateur d'énergie frigorifique est raccordé à l'évaporateur.
